# EUROPEAN PATENT APPLICATION

(11) **EP 3 045 952 A1**
(43) Date of publication of application: **20.07.2016**
(21) Application number: 15151575.6
(22) Date of filing: 19.01.2015
(51) Int. Cl.: G02B 27/01, G02C 5/00, G02C 5/12, G02C 5/20

(54) **Near eye device adjustment**

(71) Applicant: Nokia Technologies OY, 02610 Espoo (FI)
(72) Inventor: Piippo, Petri, 37500 Lempäälä (FI); Järvenpää, Toni, 37800 Akaa (FI); Nurmi, Juha, 24100 Salo (FI)
(74) Representative: Nokia Corporation

(57) **Abstract**

An apparatus, such as a near eye device, is disclosed. The apparatus comprises a near eye display; and a frame comprising at least one support element configured to support the frame against a head of a user of the apparatus. The support element comprises electrically transformable material. The electrically transformable material can be used for adjusting posture of the apparatus and for calibrating the apparatus.

## Description

### TECHNICAL FIELD

The present application generally relates to near eye devices or smart eyewear and in particular, but not exclusively, to adjustment or calibration of the near eye devices.

### BACKGROUND

This section illustrates useful background information without admission of any technique described herein representative of the state of the art.

In order to properly work, a near eye device (NED) or smart eyewear usually needs to be adjusted to fit a particular user. Adjustment or calibration is needed for example to allow the user of the device to have the best visibility to a (near eye) display of the device. During usage readjustment may be needed, too.

### SUMMARY

Various aspects of examples of the invention are set out in the claims.

According to a first example aspect of the present invention there is provided an apparatus comprising
a near eye display; and
a frame comprising at least one support element configured to support the frame against a head of a user of the apparatus, wherein the support element comprises electrically transformable material.

In an example embodiment, the apparatus comprises a control unit configured to control said electrically transformable material to adjust the support element.

In an example embodiment, the control unit is configured to automatically control the electrically transformable material to adjust the support element and posture of the frame relative to the head of the user of the apparatus.

In an example embodiment, the control unit is configured to allow manual control of the electrically transformable material to adjust the support element.

In an example embodiment, the control unit is configured to adjust said support element to calibrate the apparatus or the near eye display. Calibration of the apparatus may comprise aligning the near eye display with line of sight of the user of the apparatus.

In an example embodiment, the control unit is configured to determine whether the near eye display is aligned with a line of sight of the user of the apparatus. The control unit is configured to adjust said support element to align the near eye display with the line of sight of the user of the apparatus, if the near eye display is not aligned with the line of sight of the user of the apparatus.

In an example embodiment, the support element comprises a nose pad and the control unit is configured to adjust the nose pad by controlling the electrically transformable material.

In an example embodiment, the support element comprises temples and the control unit is configured to adjust the temples by controlling the electrically transformable material.

In an example embodiment, the control unit is configured to adjust pressure of the support element against the head of the user by controlling the electrically transformable material.

In an example embodiment, the control unit is configured to adjust position of the support element relative to the frame by controlling the electrically transformable material.

In an example embodiment, the electrically transformable material is electroactive polymer.

According to a second example aspect of the present invention there is provided a method comprising
adjusting posture of an apparatus relative to a head of a user of the apparatus, the apparatus comprising a near eye display and a frame comprising at least one support element configured to support the frame against the head of the user of the apparatus, wherein the support element comprises electrically transformable material, and wherein the adjusting comprises
controlling the electrically transformable material to adjust the support element.

In an example embodiment, the method further comprises using adjustment of the support element for calibrating the near eye display.

In an example embodiment, the method further comprises adjusting pressure of the support element against the head of the user by controlling the electrically transformable material.

In an example embodiment, the method further comprises adjusting position of the support element relative to the frame by controlling the electrically transformable material.

According to a third example aspect of the present invention there is provided a computer program comprising instructions, which control an apparatus to perform the method of the second aspect when the computer program is run on a processor. The computer program may be stored on a non-transitory memory medium.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Figs. 1A, 1B, 2A and 2B illustrate alignment of near eye displays;
Figs. 3A, 3B, 4A and 4B illustrate nose pad adjustment according to an example embodiment;
Fig. 5A shows a top view illustrating a near eye device according to an example embodiment;
Fig. 5B shows a side view illustrating a near eye device according to an example embodiment;
Fig. 6A shows a top view illustrating temple adjustment according to an example embodiment;
Fig. 6B shows a side view illustrating temple adjustment according to an example embodiment;
Fig. 7 shows a block diagram illustrating functional blocks of a near eye device according to an example embodiment;
Fig. 8 shows a flow diagram illustrating a method according to an example embodiment; and
Fig. 9 shows a flow diagram illustrating a method according to another example embodiment.

### DETAILED DESCRIPTION OF THE DRAWINGS

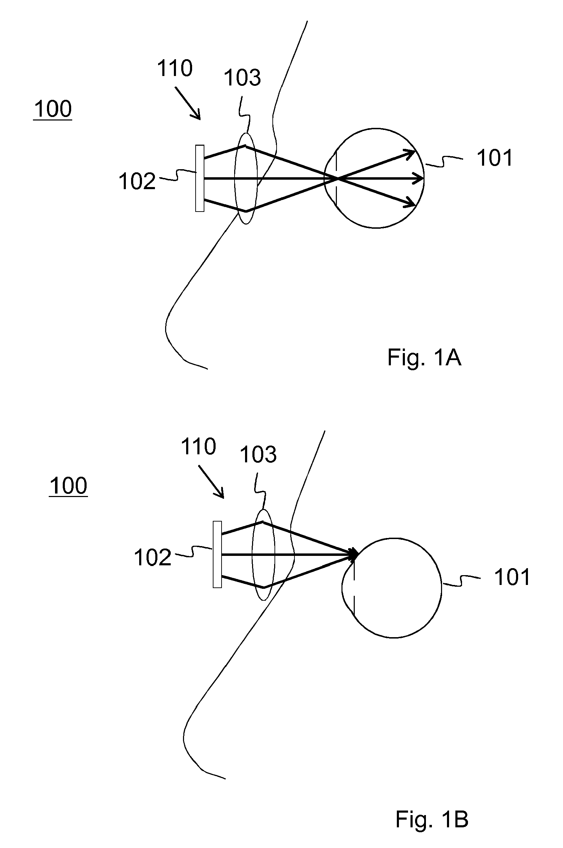

An example embodiment of the present invention and its potential advantages are understood by referring to Figs. 1A through 9 of the drawings. In this document, like reference signs denote like parts or steps.

A near eye device (NED) or smart eyewear refers to an apparatus that is configured to be worn by a user near the eyes of the user. The device is usually configured to fit the head of the user and may comprise for example support elements configured to support the device against the head of the user. The device may take the form of glasses for example, and the support elements providing support against the head of the user may comprise nose pads and temples for example. Eyes can only observe an image displayed on a near eye display if the center of the out-coupling area of the near eye display (e.g. out-coupling area of an exit pupil expander or similar) is close to the optical axis of the eye. Therefore, in order to properly work, near eye displays of near eye devices need to be properly aligned with the line of sight or the eyes or the optical axis of the eye of the user. Therefore, the device usually needs to be adjusted or calibrated to fit a particular user. Adjustment or calibration may be performed when one starts to use the device. During usage readjustment may be needed, too.

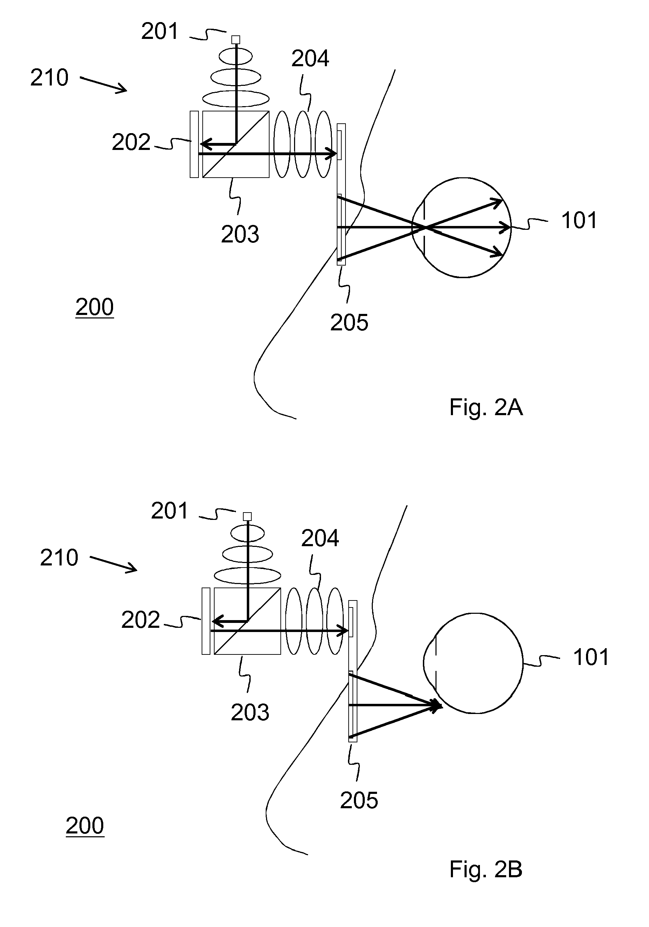

Figs. 1A, 1B, 2A and 2B illustrate alignment of near eye displays.

Figs. 1A and 1B disclose a scenario 100 where a conventional near eye display 110 is used. The near eye display 110 comprises an emissive microdisplay 102 and optic element 103. In Fig. 1A the near eye display 110 is aligned with an eye 101 and line of sight of a user and the user is able to properly view the content on the near eye display 110. In Fig. 1B the near eye display 110 is too high in relation to the eye 101 and line of sight of the user and the user may not able to properly view the content on the near eye display 110 or the user may not be able to see the whole field-of-view of the content on the near eye display 110 or the user may not be able to comfortably view the content on the near eye display 110. That is, the near eye display 110 is misaligned.

Figs. 2A and 2B disclose a scenario 200 where a near eye display 210 with exit pupil expander (EPE) plates 205 is used. The near eye display 210 comprises a light source, leds 201, a reflective microdisplay 202, a beam splitter 203, optic element 204, and an EPE plate 205. In Fig. 2A the near eye display 210 is aligned with an eye 101 and line of sight of a user and the user is able to properly view the content on the near eye display 210. In Fig. 2B the near eye display 210 is too low in relation to the eye 101 and line of sight of the user and the user may not able to properly view the content on the near eye display 210 or the user may not be able to see the whole field-of-view of the content on the near eye display 210 or the user may not be able to comfortably view the content on the near eye display 210. That is, the near eye display 210 is misaligned.

In an example embodiment, a support element of a near eye device comprises electrically transformable material. In an example embodiment, the electrically transformable material is electroactive polymer (EAP). Electroactive polymers are polymers that exhibit a change in size or shape when stimulated by an electric field. A typical characteristic property of an EAP is that they may undergo a large amount of deformation while sustaining large forces.

In an example embodiment, the electrically transformable material is controlled to provide adjustment or calibration of the near eye device. The support element may comprise a nose pad and the adjustment may comprise adjusting the nose pad. For example, height of the nose pad may be adjusted and/or pressure of the nose pad against nose of a user may be adjusted. Additionally or alternatively the support element may comprise temple(s) or arms and the adjustment may comprise adjusting the temples or arms. For example, height of the temples may be adjusted and/or pressure of the temples against the head of a user may be adjusted.

In an example embodiment, the electrically transformable material is automatically controlled to provide adjustment or calibration of the near eye device. That is, the near eye device is automatically calibrated and the near eye display(s) aligned with the line of sight of the user. For example eye tracking may be used for determining required adjustment, and the determined adjustment may be automatically performed by simulating the electrically transformable material of the support elements by a suitable electrical field. In an embodiment, video based gaze tracking camera(s) are used for detecting the eye position. In another embodiment, separate eye camera(s) are provided for this purpose. Alternatively or additionally, manual control of the electrically transformable material may be allowed.

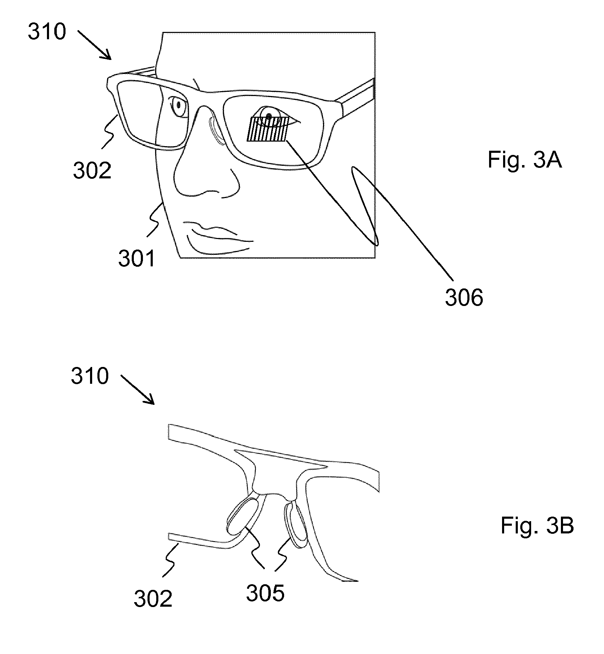

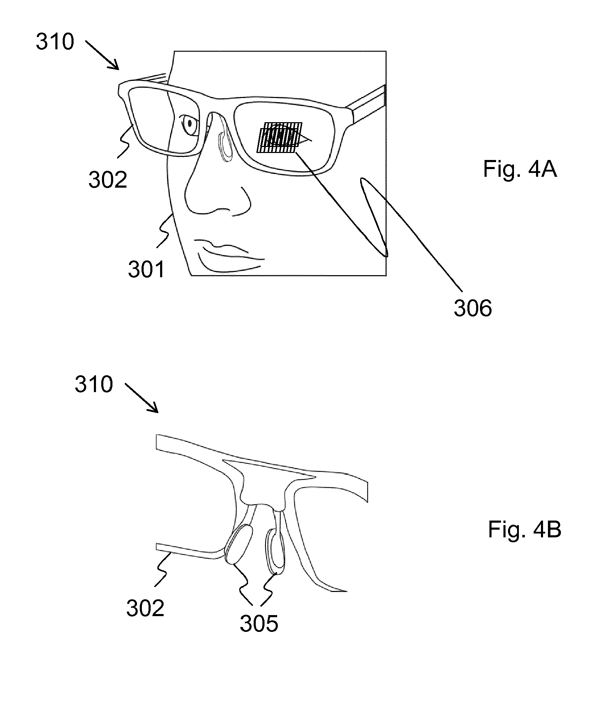

Figs. 3A, 3B, 4A and 4B illustrate nose pad adjustment according to an example embodiment.

Figs. 3A and 4A show a user 301 wearing a near eye device (glasses) 310. The near eye device comprises a frame 302 and near eye displays in lenses on the glasses (not shown in the Figure for the sake of clarity). Shaded area 306 illustrates output grating area of an EPE plate. Output grating is shown only for the left eye. Clearly a similar display may be included in the right lens, too.

Figs. 3B and 4B show nose pad 305 of the near eye device 310 and posture of the nose pad in scenarios of Figs. 3A and 4A, respectively. In an embodiment the nose pad 305 comprises electrically transformable material and position of the nose pad may adjusted by controlling the electrically transformable material.

In Fig. 3A, the near eye device 310 is misaligned (the output grating area 306 of the EPE plate is too low compared to the eyes of the user 301 and the image from the EPE is not directed to the pupil of the eye of the user 301, that is, the eye pupil of the user 301 is not located in the exit pupil of the near eye display) and the posture of the near eye device 310 needs to be adjusted. The nose pad 305 in Fig. 3B is in its initial position.

In Fig. 4B the nose pad 305 has been adjusted to provide tighter fitting and to lift the near eye device higher in relation to the eyes of the user 301. In corresponding Fig. 4A the near eye device 310 is now properly aligned (the output grating area 306 of the EPE plate is directed to the pupil of the eye of the user 301).

In an embodiment the near eye device 310 comprises control unit that is configured to detect the misaligned posture in Fig. 3A and to automatically adjust the nose pad 305 to achieve the aligned posture shown in Fig. 4A. Additionally or alternatively the control unit may adjust other support element instead of only nose pad. E.g. temples may be adjusted.

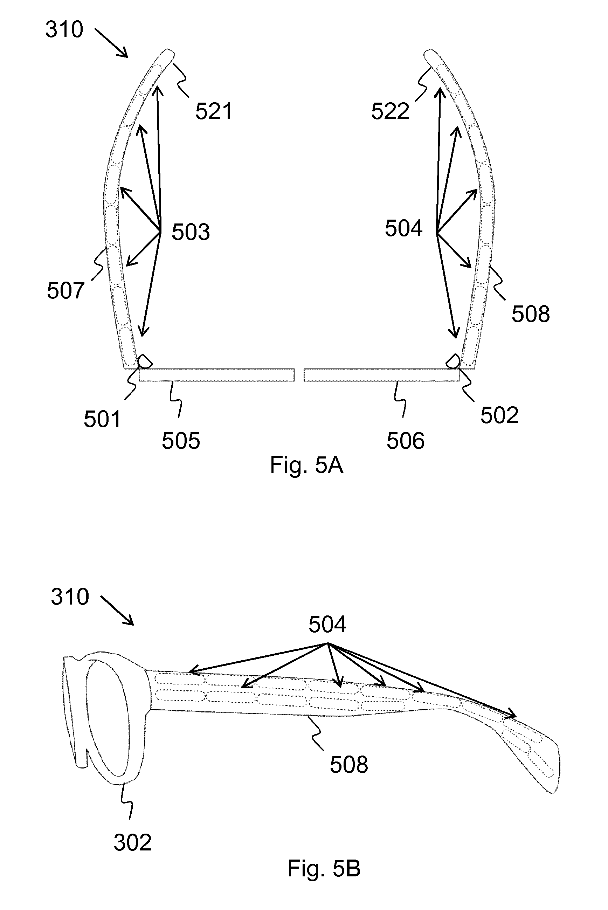

Fig. 5A shows a top view illustrating a near eye device 310 according to an example embodiment. The near eye device 310 comprises right temple 507 and left temple 508, right EPE plate 505 and left EPE plate 506, right eye tracking camera 501 and left eye tracing camera 502. Right temple 507 comprises a plurality of electrically transformable elements 503 and a touch sensor 521 on inner side of the temple. Respectively, the left temple 508 comprises a plurality of electrically transformable elements 504 and a touch sensor 522 on inner side of the temple. The electrically transformable elements 503 and 504 may be arranged in series in the respective temples. The electrically transformable elements 503 and 504 may be individually controllable or the same control signal may be arranged to control all electrically transformable elements 503 and 504. The touch sensors 521 and 522 may be touch screens or other sensors capable of sensing proximity of user's head or distance between user's head and respective temple.

Fig. 5B shows a side view illustrating a near eye device 310 according to an example embodiment. The near eye device 310 comprises a frame 302 and temple 508. Only left side temple 508 is shown, but clearly a right side temple may be there, too. The temple 508 comprises a plurality of electrically transformable elements 504.

In an embodiment the near eye device 310 comprises a control unit that is configured to automatically adjust the temples 507 and 508 to adjust the posture of the near eye device 310. In an embodiment the eye tracking cameras 501 and 502 are used to determine if the near eye device 310 (or the EPE plates 505 and 506 thereof) is aligned with optical axis of the eyes of the user of the device and if there is a need for calibration or adjustment of the posture of the near eye device. The eye tracking cameras 501 and 502 for example detect orientation and location of the eye pupils of the user. The control unit is configured to adjust the temples (to control the electrically transformable elements thereof) accordingly if there is a need to calibrate or to adjust the near eye device. The control unit may use the sensors 521 and 522 in determining the required adjustment. Additionally or alternatively the control unit may adjust other support element instead of only temples. E.g. nose pad may be adjusted.

In an embodiment a control unit that is configured to detect a need to adjust or calibrate the near eye device automatically performs the adjustment by controlling electrically transformable material in one or more support elements (e.g. nose pads or temples) of the near eye device. In an alternative embodiment, the control unit provides to the user a recommendation to manually control the electrically transformable material in the one or more support elements.

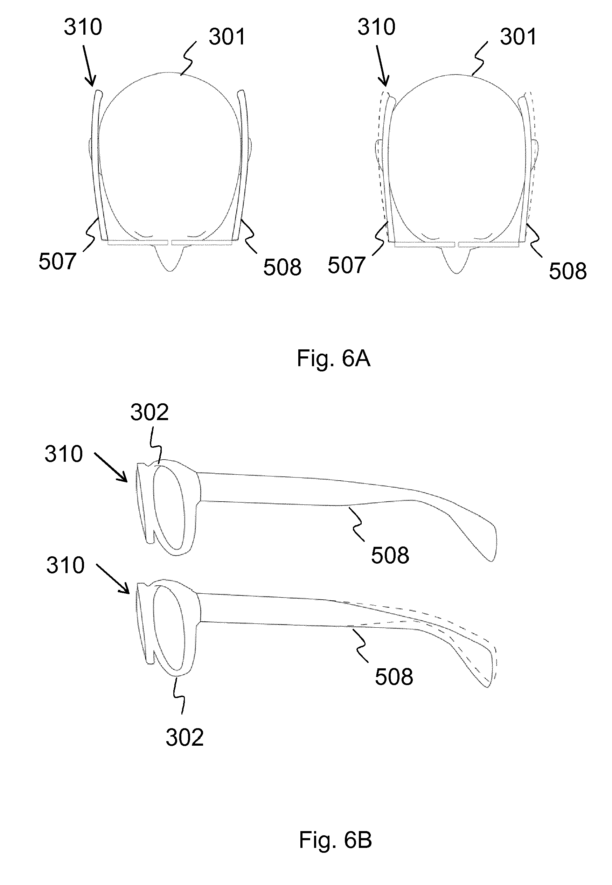

Fig. 6A shows a top view illustrating temple adjustment according to an example embodiment. Fig. 6B shows a side view illustrating temple adjustment according to an example embodiment. Figs. 6A and 6B show a near eye device 310 that comprises temples 507 and 508. The left side of Fig. 6A illustrates a user 301 wearing the near eye device 310 in an initial position. The right side of Fig. 6A shows that the temples 507 and 508 are adjusted to squeeze harder against the head of the user 301. Respectively, the upper instance of the near eye device in Fig. 6B shows the temple 508 in its initial position (corresponding to the left side of Figure 6A), and the lower instance of the near eye device in Fig. 6B shows the temple 508 in a position where the temple is adjusted to squeeze harder against the head of the user (corresponding to the right side of Figure 6A).

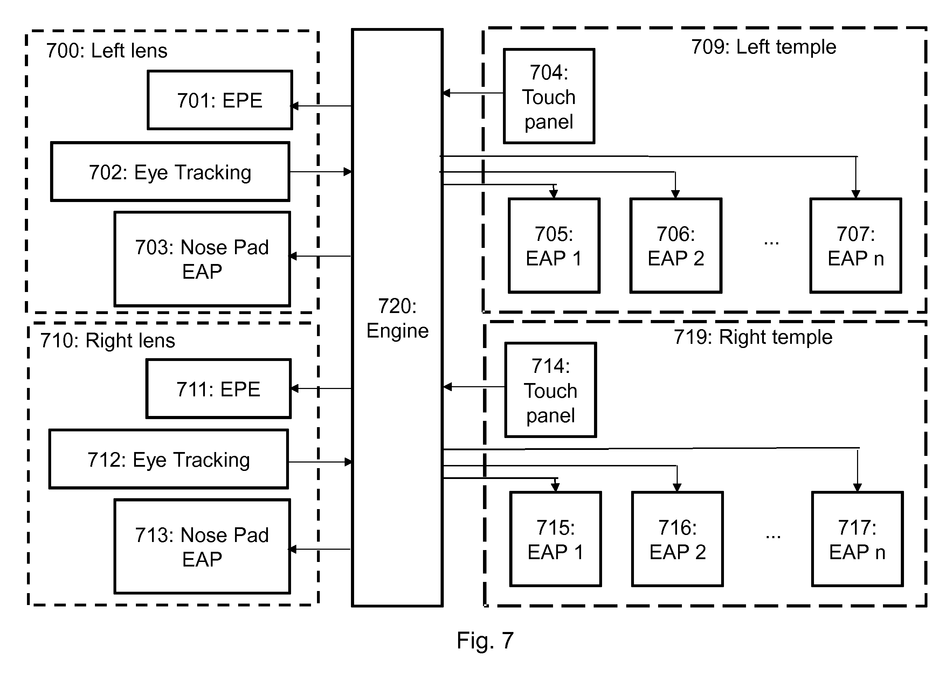

Fig. 7 shows a block diagram illustrating functional blocks of a near eye device according to an example embodiment. The near eye device comprises a left lens unit 700, a right lens unit 710, an engine 720, a left temple unit 709 and a right temple unit 719.

The engine 720 may comprise a control unit and memory (not shown). The control unit may be for example a processor, a controller, a microprocessor, a digital signal processor (DSP), an application specific integrated circuit (ASIC), a field programmable gate array, a microcontroller or a combination of such elements. The memory may store instructions or computer programs executable by the control unit.

The left lens unit 700 comprises an EPE plate 701, an eye tracking unit 702 (e.g. a camera), and electrically transformable element 703 in a nose pad. The right lens unit 710, comprises an EPE plate 711, an eye tracking unit 712 (e.g. a camera), and electrically transformable element 713 in a nose pad.

The left temple unit 709 comprises a touch sensor 704 (e.g. a touch panel), and plurality of electrically transformable elements 705-707. The right temple unit 719 comprises a touch sensor 714 (e.g. a touch panel), and plurality of electrically transformable elements 715-717.

In an example embodiment, the near eye device of Fig. 7 operates as follows: The eye tracking units 702 and 712 provide to the engine 720 information about position of user's eyes/pupils. The touch sensors 704 and 714 provide to the engine 720 information about contacts between the temples 709 and 719 and the head of the user. Based on the information provided by the eye tracking units 702 and 712 and/or the touch sensors 704 and 714, the engine 720 determines, if there is a need to adjust posture of the near eye device. If there is a need to adjust the posture of the near eye device, the engine 720 sends to one or more of the electrically transformable elements 703, 713, 705-707, 715-717 control signals that transform the electrically transformable elements as required to provide the desired adjustment of the posture of the near eye device. Additionally, the engine 720 provides (image) data to be displayed to the user through the EPE plates 701 and 711. The engine 720 may e.g. run some application that displays data and/or images to the user.

In an alternative embodiment the adjustment of the posture of the near eye device or one of support elements comprised therein is triggered by some application instead of being triggered by the information provided by the eye tracking units 702 and 712 or by the touch sensors 704 and 714. In such case, the adjustment may be performed for example to give feedback to the user of the near eye device.

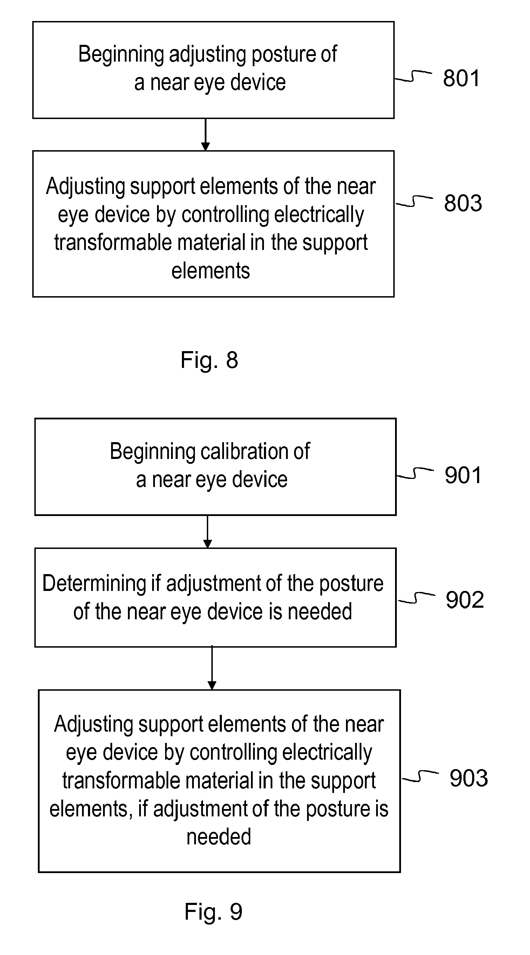

Fig. 8 shows a flow diagram illustrating a method according to an example embodiment of the invention. The method is performed for example in one of the foregoing near eye devices. The method begins at step 801 that comprises beginning adjusting posture of a near eye device. In step 803, support elements of the near eye device are adjusted by controlling electrically transformable material in the support elements. The adjustment of the support elements is performed for example by controlling electrical simulation of (e.g. electrical current going through) the electrically transformable material.

Fig. 9 shows a flow diagram illustrating a method according to an example embodiment of the invention. The method is performed for example in one of the foregoing near eye devices. The method begins at step 901 that comprises beginning calibration of a near eye device. In step 902, it is determined if adjustment of the posture of the near eye device is needed to calibrate the near eye device. Type and magnitude of the required adjustment may be determined. Determining if adjustment of the posture of the near eye device is needed may be based on tracking eyes/pupils of the user. If adjustment of the posture is needed, support elements of the near eye device are adjusted in step 903 by controlling electrically transformable material in the support elements. The adjustment of the support elements is performed for example by controlling electrical simulation of (e.g. electrical current going through) the electrically transformable material.

In an example embodiment, the support elements of a near eye device are adjusted in order to calibrate the device and to align the near eye displays of the device with the eyes of the user of the device. Additionally or alternatively, adjustment of the support elements may be triggered by some other stimuli.

In an example embodiment, increased motion is detected and in response nose pad and/or temples of a near eye device are squeezed a bit harder against the head of the user of the device.

In an example embodiment, a combination of adjustment of temples and nose pad may be used to stabilize or suppress undesired movements of the near eye device. Such undesired movements may include for example repeating motion/movement such as tremble caused by jogging or driving on a rough road.

In an example embodiment, adjustment of the support elements is used for giving feedback to the user of the device. Feedback may be given e.g. by squeezing or vibrating nose pad or temples. For example, a navigation application might guide the user to turn left by adjusting the left side temple.

In an example embodiment, adjustment of the support elements is used for moving ears of the user of the device to indicate mood of the user.

In an example embodiment, adjustment of the support elements is used to move glasses closer to the face of the user. This may be provided by adjusting successive electrically transformable elements on the temples in turns. The electrically transformable elements on the temples are adjusted in series so that different parts of the temples successively grasp the skin of the user. The grasping element is then contracted thus moving the glasses. That is, while some electrically transformable elements are controlled to grasp the skin of the user, some other electrically transformable elements are not. In this way the temples may make a wave-like or a crawling movement that may cause the near eye device to move closer to the face of the user.

In an example embodiment, electrically transformable material in a nose pad is used for adjusting the pressure of the nose pad against the head of the user in horizontal direction and vertical adjustment of the nose pad is performed manually. In more general terms, adjustment in a first direction may be provided by adjustment of the electrically transformable material while adjustment in a second direction is performed manually. The same may apply to other support elements, too.

In an example embodiment, temples that comprise electrically transformable material further comprise one or more hinges to provide further adjustment of the temples. Adjustment of the electrically transformable material may cause turning the hinge(s).

In an example embodiment, IPD (interpupillary distance) adjustment is performed by adjusting the support element(s) comprising electrically transformable material.

Without in any way limiting the scope, interpretation, or application of the claims appearing below, a technical effect of one or more of the example embodiments disclosed herein is improved calibration. Another technical effect of one or more of the example embodiments disclosed herein is improved fit. Support elements of devices of example embodiments may adapt to different head forms and stay in place with ergonomic grip. Another technical effect of one or more of the example embodiments disclosed herein is that it may be possible to improve EPE efficiency as automatic calibration and adjustment may allow use of smaller exit pupil and out-coupling area. Another technical effect of one or more of the example embodiments disclosed herein is improved user experience due to easy and possibly automatic adjustment.

If desired, the different functions discussed herein may be performed in a different order and/or concurrently with each other. Furthermore, if desired, one or more of the before-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications which may be made without departing from the scope of the present invention as defined in the appended claims.

## Claims

1. An apparatus, comprising:
a near eye display; and
a frame comprising at least one support element configured to support the frame against a head of a user of the apparatus, wherein said support element comprises electrically transformable material.

2. The apparatus of claim 1, comprising a control unit configured to control said electrically transformable material to adjust said support element.

3. The apparatus of claim 2, wherein said control unit is configured to automatically control said electrically transformable material to adjust said support element and posture of the frame relative to the head of the user of the apparatus.

4. The apparatus of claim 2 or 3, wherein said control unit is configured to allow manual control of said electrically transformable material to adjust said support element.

5. The apparatus of any one of claims 2-4, wherein said control unit is configured to adjust said support element to calibrate the apparatus.

6. The apparatus of any one of claims 2-5, wherein said control unit is configured
to determine whether the near eye display is aligned with a line of sight of the user of the apparatus, and
if the near eye display is not aligned with the line of sight of the user of the apparatus, to adjust said support element to align the near eye display with the line of sight of the user of the apparatus.

7. The apparatus of any one of claims 2-6, wherein said support element comprises a nose pad and said control unit is configured to adjust said nose pad by controlling said electrically transformable material.

8. The apparatus of any one of claims 2-7, wherein said support element comprises temples and said control unit is configured to adjust said temples by controlling said electrically transformable material.

9. The apparatus of any one of claims 2-8, wherein said control unit is configured to adjust pressure of the support element against the head of the user by controlling said electrically transformable material.

10. The apparatus of any one of claims 2-9, wherein said control unit is configured to adjust position of the support element relative to the frame by controlling said electrically transformable material.

11. The apparatus of any preceding claim, wherein said electrically transformable material is electroactive polymer.

12. A method, comprising:
adjusting posture of an apparatus relative to a head of a user of the apparatus, the apparatus comprising a near eye display and a frame comprising at least one support element configured to support the frame against the head of the user of the apparatus, wherein said support element comprises electrically transformable material, and wherein said adjusting comprises
controlling said electrically transformable material to adjust said support element.

13. The method of claim 12, further comprising using adjustment of said support element for calibrating the apparatus.

14. The method of claim 12 or 13, further comprising adjusting pressure of the support element against the head of the user by controlling said electrically transformable material.

15. The method of any one of claims 12-14, further comprising adjusting position of the support element relative to the frame by controlling said electrically transformable material.
